# EUROPEAN PATENT APPLICATION

(11) **EP 3 208 758 A1**
(43) Date of publication of application: **23.08.2017**
(21) Application number: 16188041.4
(22) Date of filing: 09.09.2016
(51) Int. Cl.: G06Q 10/10, H04L 12/58

(54) **SYSTEMS AND METHODS FOR ELECTRONIC MAIL COMMUNICATION BASED DATA MANAGEMENT**

(30) Priority: 17.02.2016 IN 201621005608
(71) Applicant: Tata Consultancy Services Limited, Maharashtra (IN)
(72) Inventor: SHAH, Viral Prakash, 4800078 Mumbai, Maharashtra (IN); SINGH, Gaurav, 4800078, Mumbai, Maharashtra (IN); KHANDELWAL, Aakash, 4800078 Mumbai, Maharashtra (IN); SANYAL, Sourabh, 4800078 Mumbai, Maharashtra (IN)
(74) Representative: Goddar, Heinz J.

(57) **Abstract**

Data management systems and methods are provided. The system obtains, an email with a file or file identifier, the file includes a set of records. A first set of instructions or a second set of instructions are executed based on the email. The first set of instructions include parsing the file to validate the first set of records, querying a first database to determine any of inconsistent record, new record, missing record, and redundant record based on the first set of records, and automatically updating the first record specific database based on the determined inconsistent record, new record, missing record, and redundant record. The second set of instructions include validating the email with file identifier, generating an attachment file that includes information from a second database based on the validation and file identifier, and communicates an email with the attachment file to a client device.

## Description

### CROSS-REFERENCE TO RELATED APPLICATIONS AND PRIORITY

This patent application claims priority to India Patent Application 201621005608, filed on February 17, 2016, the entirety of which is hereby incorporated by reference.

### TECHNICAL FIELD

The embodiments herein generally relate to data management systems, and, more particularly, to systems and methods for electronic mail communication based data management.

### BACKGROUND

With more and more information being stored electronically, data management has become a bottleneck. For example, data management may include performing a transactions such as uploading or downloading of bulk data which may be sensitive information. Such transactions are typically performed using login credentials into a system. This involves several challenges since processing of data involves human intervention to verify and validate information. Since many users perform such transactions, it is utmost important and therefore of highly significant to maintain the accessibility to users, and consistency in information.

### SUMMARY

The following presents a simplified summary of some embodiments of the disclosure in order to provide a basic understanding of the embodiments. This summary is not an extensive overview of the embodiments. It is not intended to identify key/critical elements of the embodiments or to delineate the scope of the embodiments. Its sole purpose is to present some embodiments in a simplified form as a prelude to the more detailed description that is presented below. In view of the foregoing, an embodiment herein provides systems and methods for electronic mail communication based data management.

In one aspect, a processor implemented method is provided. The method comprising obtaining, from a client device associated with a user, an email comprising at least one of a file or a file identifier. In an embodiment, the email is received in a prescribed format. In another embodiment, the file may comprise a first set of records in a prescribed format. The method further comprises executing a first set of instructions or a second set of instructions based on the email (containing a file or a file identifier). In an embodiment, the first set of instructions comprises parsing the file to identify and validate the first set of records, querying a first record specific database to determine at least one of inconsistent record, new record, missing record, and redundant record based on the first set of records, and automatically updating the first record specific database based on the at least one of determined inconsistent record, new record, missing record, and redundant record. In an embodiment, the first set of instructions may further include generating a report based on the at least one of determined inconsistent record, new record, missing record, and redundant record. In an embodiment, the step of obtaining, an email is preceded by validating at least one of a first client device and a first user associated with the email. In an embodiment, the method may further comprise validating the attachment file by performing a file level validation on at least one of a filename, a file size, and content type specific to the attachment file.

In another embodiment, the second set of instructions further comprise processing the email and performing a validation of the email and the file identifier, the email and the file identifier being received in a predetermined format. Performing a validation comprises performing a validation of at least one of a client device and a user associated with the client device. The second set of instructions may further comprise querying a second record specific database based on the file identifier, generating, in at least one format, at least one attachment file comprising information from the second record specific database based on the request and the file identifier; and communicating an email with the at least one attachment file to the client device when the email and the file identifier is validated.

In one embodiment, the first record specific database and the second record specific database are identical. In another embodiment, the first record specific database and the second record specific database are different from each other.

In another aspect, a system is provided. The system comprising: a memory storing instructions: one or more communication interfaces; and one or more hardware processors coupled to the memory through the one or more communication interfaces, wherein the one or more hardware processors are configured by the instructions to obtain, an email from a client device of a user, the email comprising a file or a file identifier. The hardware processor is further configured to execute a first set of instructions or a second set of instructions. In an embodiment, the first set of instructions are executed by the hardware processor to parse the file to identify and validate the first set of records, query a first record specific database to determine at least one of inconsistent record, new record, missing record, and redundant record based on the first set of records, and automatically update the first record specific database based on the at least one of determined inconsistent record, new record, missing record, and redundant record. In an embodiment, the first set of instructions are further executed by the hardware processor to generate a report based on the at least one of determined inconsistent record, new record, missing record, and redundant record. In an embodiment, when the email is obtained, the hardware processor performs validating at least one of a client device and a user associated with the email or the client device. In an embodiment, the validating the file comprises performing a file level validation on at least one of a filename, a file size, and content type specific to the attachment file.

In another embodiment, the second set of instructions are executed by the hardware processor to perform a validation of the email and the file identifier, the email and the file identifier being received in a predetermined format. The step of validation comprises performing a validation of at least one of a client device and a user associated with the client device. The second set of instructions are further executed by the hardware processor to query a second record specific database based on the file identifier, generate, in at least one format, at least one attachment file comprising information from the second record specific database based on the email and the file identifier; and communicating an email with the at least one attachment file to the client device when the email and the file identifier is validated.

In one embodiment, the first record specific database and the second record specific database are identical. In another embodiment, the first record specific database and the second record specific database are different from each other.

In yet another aspect, one or more non-transitory machine readable information storage mediums comprising one or more instructions is provided. The instructions when executed by one or more hardware processors causes obtaining, from a client device associated with a user, an email comprising at least one of a file or a file identifier. In an embodiment, the email is received in a prescribed format. In another embodiment, the file may comprise a first set of records in a prescribed format. The method further comprises executing a first set of instructions or a second set of instructions based on the email (containing a file or a file identifier). In an embodiment, the first set of instructions comprises parsing the file to identify and validate the first set of records, querying a first record specific database to determine at least one of inconsistent record, new record, missing record, and redundant record based on the first set of records, and automatically updating the first record specific database based on the at least one of determined inconsistent record, new record, missing record, and redundant record. In an embodiment, the first set of instructions may further include generating a report based on the at least one of determined inconsistent record, new record, missing record, and redundant record. In an embodiment, the step of obtaining, an email is preceded by validating at least one of a first client device and a first user associated with the email. In an embodiment, the method may further comprise validating the attachment file by performing a file level validation on at least one of a filename, a file size, and content type specific to the attachment file.

In another embodiment, the second set of instructions further comprise processing the email and performing a validation of the email and the file identifier, the email and the file identifier being received in a predetermined format. Performing a validation comprises performing a validation of at least one of a client device and a user associated with the client device. The second set of instructions may further comprise querying a second record specific database based on the file identifier, generating, in at least one format, at least one attachment file comprising information from the second record specific database based on the request and the file identifier; and communicating an email with the at least one attachment file to the client device when the email and the file identifier is validated.

In one embodiment, the first record specific database and the second record specific database are identical. In another embodiment, the first record specific database and the second record specific database are different from each other.

It should be appreciated by those skilled in the art that any block diagram herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computing device or processor, whether or not such computing device or processor is explicitly shown.

### BRIEF DESCRIPTION OF THE DRAWINGS

The embodiments herein will be better understood from the following detailed description with reference to the drawings, in which:
FIG. 1 is a block diagram of a data management system according to an embodiment of the present disclosure;
FIG. 2 is a user interface view an email sent from a client application from a client device to the data management system according to an embodiment of the present disclosure;
FIG. 3 is a user interface view of an illustrative request being sent to data management system via an email in a prescribed format in accordance with an embodiment of the present disclosure;
FIG. 4 is a user interface view that illustrates validation failure status for a specific transaction being performed by a user in accordance with an embodiment of the present disclosure;
FIG. 5 is a user interface view that illustrates an error status message being communicated to a client device when a request in an email format for downloading of data is inappropriate in accordance with an embodiment of the present disclosure; and
FIG. 6 is a flow diagram illustrating a processor implemented method using the data management system of FIG. 1 according to an embodiment of the present disclosure.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present disclosure, the preferred, systems and methods are now described.

Some embodiments of this disclosure, illustrating all its features, will now be discussed in detail. The disclosed embodiments are merely exemplary of the disclosure, which may be embodied in various forms.

Before setting forth the detailed explanation, it is noted that all of the discussion below, regardless of the particular implementation being described, is exemplary in nature, rather than limiting.

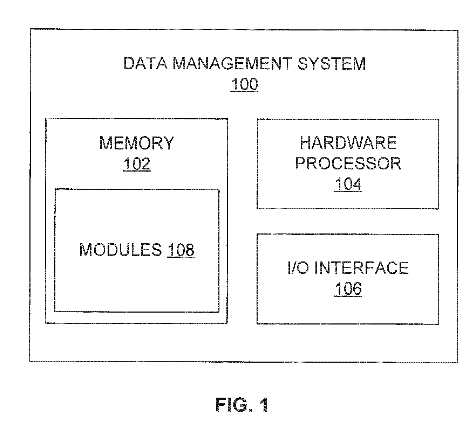

Referring now to the drawings, and more particularly to FIGS. 1 through 6, where similar reference characters denote corresponding features consistently throughout the figures, there are shown preferred embodiments and these embodiments are described in the context of the following exemplary systems and/or methods.

FIG. 1 is a block diagram of a data management system 100 according to an embodiment of the present disclosure. The terms "data management system" and "system" may be interchangeably used herein after. The system 100 comprises a memory 102, a hardware processor 104, and an input/output (I/O) interface 106. The memory 102, the hardware processor 104, the input/output (I/O) interface 106, and/or the modules 108 may be coupled by a system bus or a similar mechanism. Although the exemplary block diagram and the associated description refers to a memory and a hardware processor, it may be understood that one or more memory units and one or more hardware processors may be comprised in the data management system 100. The memory 102 further includes one or more functional modules 108. The memory 102, the hardware processor 104, the input/output (I/O) interface 106, and/or the modules 108 may be coupled by a system bus or a similar mechanism. The data management system 100 performs one or more transactions (e.g., uploading of information into a database, or generating one or more attachment files to be communicated via email to one or more computing devices) based on one or more requests. The one or more requests may be first validated and content in the requests are verified.

The memory 102, may store instructions, any number of pieces of information, and data, used by a computer system, for example the system 100 to implement the functions of the system 100. The memory 102 may include for example, volatile memory and/or non-volatile memory. Examples of volatile memory may include, but are not limited to volatile random access memory (RAM). The non-volatile memory may additionally or alternatively comprise an electrically erasable programmable read only memory (EEPROM), flash memory, hard drive, or the like. Some examples of the volatile memory includes, but are not limited to, random access memory, dynamic random access memory, static random access memory, and the like. Some example of the non-volatile memory includes, but are not limited to, hard disks, magnetic tapes, optical disks, programmable read only memory, erasable programmable read only memory, electrically erasable programmable read only memory, flash memory, and the like. The memory 102 may be configured to store information, data, applications, instructions or the like for enabling the system 100 to carry out various functions in accordance with various example embodiments.

Additionally or alternatively, the memory 102 may be configured to store instructions which when executed by the hardware processor 104 causes the system 100 to behave in a manner as described in various embodiments. The memory 102 stores the functional modules and information, for example, information received from the one or more authorized users (not shown in FIG. 1) through the one or more networks (not shown in FIG. 1).

The hardware processor 104 may be implemented as one or more microprocessors, microcomputers, microcontrollers, digital signal processors, central processing units, state machines, logic circuitries, and/or any devices that manipulate signals based on operational instructions. Further, the hardware processor 104 may comprise a multi-core architecture. Among other capabilities, the hardware processor 104 is configured to fetch and execute computer-readable instructions or modules stored in the memory 102. The hardware processor 104 may include circuitry implementing, among others, audio and logic functions associated with the communication. For example, the hardware processor 104 may include, but are not limited to, one or more digital signal processors (DSPs), one or more microprocessor, one or more special-purpose computer chips, one or more field-programmable gate arrays (FPGAs), one or more application-specific integrated circuits (ASICs), one or more computer(s), various analog to digital converters, digital to analog converters, and/or other support circuits.

The hardware processor 104 thus may also include the functionality to encode messages and/or data or information. The hardware processor 104 may include, among others a clock, an arithmetic logic unit (ALU) and logic gates configured to support operation of the hardware processor 104. Further, the hardware processor 104 may include functionality to execute one or more software programs, which may be stored in the memory 102 or otherwise accessible to the hardware processor 104.

The hardware processor 104 is configured by the instructions stored in the memory 102. The hardware processor 104 when configured by the instructions obtains (or receives), an email with an attachment file. In an embodiment, the email comprises a file as an attachment or a file identifier. The expressions "file" and "attachment file" may be interchangeably user herein. The file comprises a first set of records in a prescribed format, in one example embodiment. Based on the email received (or obtained) by the data management system 100, the hardware processor 104 is further configured to execute a first set of instructions or a second set of instructions. The hardware processor 104 is configured to execute (or executes) the first set of instructions. The first set of instructions are executed by the hardware processor 104 to validate the client device (e.g., a computer system, a laptop, a mobile communication device, and the like) and a user (e.g., a subscriber) associated with the email and the client device. The first set of instructions are executed by the hardware processor 104 to process and/or parses to identify and validate the first set of records. The file may be parsed to perform one or more functionalities, for example, spell check, errors, and the like. In one example embodiment, the first set of instructions are executed by the hardware processor 104 to validate the file by performing a file level validation on at least one of a filename, a file size, and content type specific to the attachment file. the first set of instructions are executed by the hardware processor 104 to query a first record specific database to determine at least one of inconsistent record, new record, missing record, and redundant record based on the first set of records, and automatically (or dynamically) update the first record specific database based on the at least one of determined inconsistent record, new record, missing record, and redundant record. In other words, automatically (or dynamically) updating the first record specific database based on the at least one of determined inconsistent record, new record, missing record, and redundant record may including uploading one or more records based on the determined inconsistent record, new record, missing record, and redundant record. The expressions 'record' and 'data' may be interchangeably used herein. The hardware processor 104 is further configured by the first set of instructions to generate a report based on the at least one of determined inconsistent record, new record, missing record, and redundant record.

When the email comprises a file identifier, the hardware processor 104 executes a second set of instructions. In an embodiment, the second set of instructions are executed by the hardware processor 104 to perform a validation of the email and the file identifier, wherein file identifier is indicative of information stored in a second record specific database. The second set of instructions further enable the hardware processor 104 to generate, in at least one format (e.g., abc.xls, abc.doc, abc.pdf, and the like), attachment file comprising information from the second record specific database based on the email and the file identifier being validated, and further communicate an email with the attachment file to the client device. The hardware processor 104 is further configured by the instructions to generate a report upon generating and communicating the email with the at least one attachment file. In an embodiment, the report and the attachment file may be communicated together. Validation of email and requests in email may comprise one or more requests to performing one or more transactions (e.g., uploading of data, and/or downloading of data), further includes validating one or more users. Validating the one or more users may include determining whether the one or more users are registered to the data management system 100, and subscribed to one or more services (e.g., performing the one or more transactions). Validating the one or more users may further include determining whether the one or more users have one or more privileges to perform transactions and access data (or records) present in one or more record specific databases.

In an embodiment, the first record specific database and the second record specific database are identical. For instance, the first record specific database and the second record specific database may be an employee database. In another embodiment, the first record specific database and the second record specific database are different from each other. For example, the first record specific database may be an employee details database which comprises employee name, employee number, and employee communication address. The second record specific database may be a leave records database which comprises employee name, number of leaves taken, number of leaves earned, and the like. The expressions "first record specific database" and "first database" may be interchangeably used herein. The expressions "second record specific database" and "second database" may be interchangeably used herein. The first record specific database and the second record specific database may be stored in the memory 102 or may be stored in an external memory or cloud environment, and the like.

Similarly, the email request for processing a transaction may be received from different client devices, provided the client devices have registered with the data management system 100 with a unique device identifier and have sufficient privileges to perform one or more transactions. For example, a first client device may be a laptop that is registered in the data management system 100 with a first unique device identifier (e.g., LP001) to perform a first transaction (e.g., a data upload operation), and a second client device may be a mobile communication device that is registered in the data management system 100 with a corresponding second unique device identifier (e.g., MCD001) to perform a second transaction (e.g., data download operation). In an instance, the client device may remain same to perform both data upload, and data download operations. Similarly, different users may perform transactions based on the privileges. In an embodiment, a first user may be John Doe who is subscribed and registered to the services to perform a data upload operation, and a second user may be Mark Anthony who is subscribed and registered to the services to perform a data download operation.

The data management system 100 may execute the modules 108 comprising a parsing module that when executed by the hardware processor 104 parses a received email from a client device, validates the client device, a user of the client device, an attachment file in the received email and further identifies and validates the first set of records in the attachment file. Alternatively, the modules 108 may comprise a validation module that is invoked by the parsing module to validate the client device, the user of the client device, the attachment file in the received email and the first set of records in the attachment file. The modules 108 further comprises a query module that when executed by the hardware processor 104 queries a first record specific database to determine at least one of inconsistent record, new record, missing record, and redundant record based on the first set of records. The modules 108 further comprises an update module that when executed by the hardware processor 104 automatically (or dynamically) updates the first record specific database based on the at least one of determined inconsistent record, new record, missing record, and redundant record. The modules 108 further comprises a report generation module that when executed by the hardware processor 104 generates a report based on the at least one of determined inconsistent record, new record, missing record, and redundant record.

The modules 108 further comprises a request processing module that when executed by the hardware processor 104 processes a request (or email) comprising file identifier wherein the request is received in a predetermined format via an email, and may be specific (or pertain) to information stored in a second record specific database. The validation module may further validate the request, including a (second) client device and a user associated with the request. The modules 108 further comprises a file generation module that when executed by the hardware processor 104 generates at least one attachment file (in at least one format) comprising information from the second record specific database based on the request and the attachment identifier. The modules 108 may further comprise a communication module that when executed by the hardware processor 104 communicates an email with the at least one attachment file to the (second) client device when the request is validated. The report generation module may generate a report that is indicative of transaction status (e.g., successful or unsuccessful, and/or if any error) associated with the request.

The modules 108 for example, the parsing module, the validation module, the query module, the update module, the report generation module, the request processing module, the file generation module, and the communication module are implemented as at least one of a logically self-contained part of a software program, a self-contained hardware component, and/or, a self-contained hardware component, with a logically self-contained part of a software program embedded into each of the hardware component that when executed perform the above method described herein, in one embodiment. In scenarios where the modules 108 are self-contained hardware component, with a logically self-contained part of a software program embedded into each of the hardware component, the modules 108 may be externally connected to the memory 102.

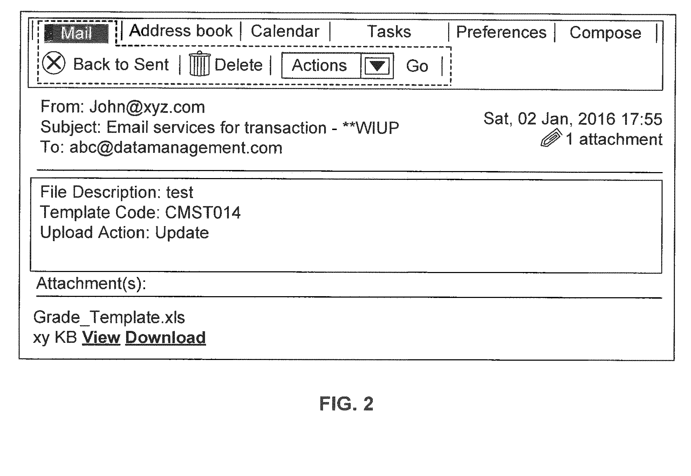

FIG. 2, with reference to FIG. 1, is a user interface view an email sent from a client application from a client device to the data management system 100 according to an embodiment of the present disclosure. As depicted in the user interface view, the email include a prescribed email format, and a predefined filename format for the attachment file (Grade_Template). For example, for data upload, the email format may comprise in the subject line **WIUP, where WI may refer to web installer, and UP is indicative of data upload operation. In an embodiment, an attachment file (employee details) comprising one or more records is illustrated below table:

**Table 1**

| Sl. No | Employee | Subject 1 | Subject 2 | Subject 3 | Subject 4 |
|---|---|---|---|---|---|
| 1 | John | 80 | 76 | 85 | 68 |
| 2 | Amit | 78 | 96 | 84 | 86 |
| 3 | Vishal | 65 | 69 | 78 | 94 |
| 4 | Ajay | 88 | 98 | 75 | 70 |
| 5 | Vinod | 76 | 87 | 63 | 82 |

As can be depicted from the above Table 1, that the file (or attachment file) contains employee details and scores for respective subjects for a test taken under a specific course. The data management system 100 performs validation of the attachment file, and a first set of records in the attachment file for spell check, errors, and the like. The hardware processor 104 then queries a record specific database to determine at least one of inconsistent record, new record, missing record, and redundant record based on the first set of records. Below table is an illustrative example of the records present in an employee database.

**Table 2**

| Sl. No | Employee | Subject 1 | Subject 2 | Subject 3 | Subject 4 |
|---|---|---|---|---|---|
| 1 | John | 80 | 76 | 85 | 68 |
| 2 | Amit | 78 | 96 | 84 | 86 |
| 3 | Vishal | 65 | 69 | 78 | 94 |
| 4 | Ajay | 88 | 98 | 75 | 70 |

It is evident from the tables 1 and 2, that upon querying the employee database, it is determined that a new record pertaining to employee Vinod is found, and the remaining records for employees John, Amit, Vishal, and Ajay are found to be identical when compared with records of employee database with the first set of records from the attachment file. The data management system 100 automatically identifies the new records, and updates only the new records (e.g., in this case the records pertaining to Vinod, and corresponding subject scores), since the remaining records are already existing in the employee database. Below is an illustrative example of the updated employee database:

**Table 3**

| Sl. No | Employee | Subject 1 | Subject 2 | Subject 3 | Subject 4 |
|---|---|---|---|---|---|
| 1 | John | 80 | 76 | 85 | 68 |
| 2 | Amit | 78 | 96 | 84 | 86 |
| 3 | Vishal | 65 | 69 | 78 | 94 |
| 4 | Ajay | 88 | 98 | 75 | 70 |
| 5 | Vinod | 76 | 87 | 63 | 82 |

Similarly, one or more registered and subscribed users can send email requests for subsequent updation of specific databases present in the data management system 100. For example, an employee details attachment file is illustrated in below table 4:

**Table 4**

| Sl. No | Employee | Subject 1 | Subject 2 | Subject 3 | Subject 4 |
|---|---|---|---|---|---|
| 1 | John | 80 | 76 | 85 | 68 |
| 2 | Amit | 78 | 96 | 84 | 86 |
| 3 | Vishal | 65 | 69 | | 94 |
| 4 | Ajay | 88 | | 75 | 70 |
| 5 | Vinod | 76 | 87 | 63 | 82 |
| 6 | Satish | 81 | 3 | 88 | 64 |

The data management system 100 may then query a record specific database based on the email and attachment file (e.g., in this case the employee database). For example, when a registered and subscribed user sends an email with the attachment file (employee details), the employee database gets queried and at least one of inconsistent record, new record, missing record, and redundant record are determined. Upon querying the employee database based on the records received by the data management system 100 as depicted in Table 4, the data management system 100 determines that there is a missing record for subject 3 pertaining to employee Vishal, and a missing record for subject 2 pertaining to employee Ajay. Additionally, the data management system 100 further determines that there are new records (e.g., employee Satish, and scores corresponding to respective subjects). The data management system 100 automatically updates the employee database based on the records in Table 4. As can be seen from Table 3, there were records present for subject 3 pertaining to employee Vishal, and for subject 2 pertaining to employee Ajay, the data management system 100 generates a report with the determined missing records, and new records with corresponding cell identifiers, and the like. The data management system 100 may request the registered and subscribed user to validate these determined missing records, and new records with corresponding cell identifiers, and further request for correction, if the records were present in Table 4 in error. For instance, in the previously updated employee database present in the data management system 100, the score for subject 3 was 78 pertaining to the employee Vishal, whereas, the Table 4 which is present in the attachment file in the email received from the registered client device has a NULL value (or equivalent value being assumed as zero '0'). In such scenarios, the data management system 100 either identifies this record as an inconsistent record, or a missing record, and generates a report that is indicative of the inconsistent record, or the missing record corresponding to subject 3 of Vishal. The report is then communicated to the registered user for making appropriate corrections to the attachment file shared by him/her, and obtain a confirmation on whether the record present in the employee database is an inconsistent record, a correct record, or a missing record. In either case, based on the inputs provided by the registered user the inconsistent record, or the missing record is updated in the employee database. For instance, the inputs from the registered user may include a corrected value/score for one or more subjects pertaining to one or more employees. In scenarios, whether the data management system 100 does not receive any inputs from the registered user, the data management system 100 may leave the field (or that particular cell) empty in the employee database, or represent with a value '0' or simply specify it as "NULL". The updated employee database (e.g., where the registered user has provided input as '0' or 'NULL') is illustrated as below table 5:

**Table 5**

| Sl. No | Employee | Subject 1 | Subject 2 | Subject 3 | Subject 4 |
|---|---|---|---|---|---|
| 1 | John | 80 | 76 | 85 | 68 |
| 2 | Amit | 78 | 96 | 84 | 86 |
| 3 | Vishal | 65 | 69 | 0 | 94 |
| 4 | Ajay | 88 | 0 | 75 | 70 |
| 5 | Vinod | 76 | 87 | 63 | 82 |
| 6 | Satish | 81 | 3 | 88 | 64 |

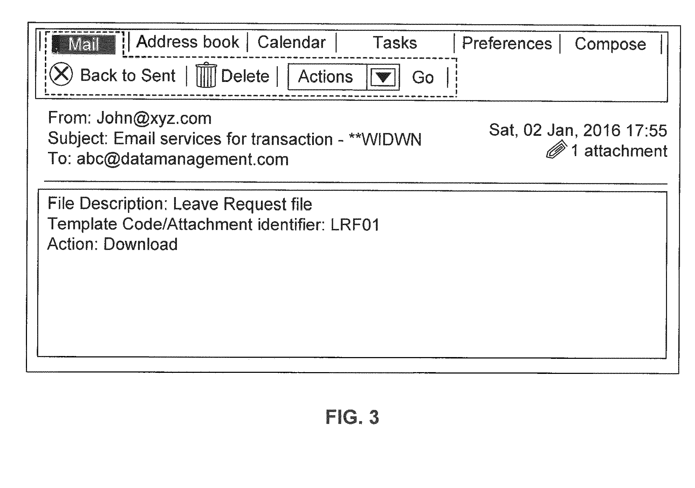

FIG. 3, with reference to FIGS. 1-2, is a user interface view of an illustrative request being sent to data management system via an email in a prescribed format in accordance with an embodiment of the present disclosure. More particularly, FIG. 3 illustrates a predefined email format comprising a request for data download. For instance, for data download, the email format may comprise in the subject line **WIDWN, where WI may refer to web installer, and DWN is indicative of data download operation. For example, the request may include an attachment identifier (e.g., LRF01) for data download pertaining to leaves taken by employees in an entity (e.g., an organization). In an embodiment, the request is validated. For instance, as described above, corresponding user (e.g., John@xyz.com), and a client device associated with the user and the request may further be validated. Based on the validated being performed by the data management system 100, the user is able to perform transactions (e.g., downloading of data from a specific database). In an instance, the data management system 100 generates a leave request file in at least one format by querying a leave policy database present in the data management system 100. The data management system 100 may then communicate the leave request file via an email to the client device along with a report indicative of a transaction status. An illustrative example of a leave request file containing one or more records pertaining to leaves specific to one or more employees is communicated to client device (or user) via email and is shown in below table 6:

**Table 6**

| Sl. No | Employee | Earned Leave Taken/Left | Sick Leave Taken/Left | Casual Leave Taken/Left |
|---|---|---|---|---|
| 1 | Rajesh | 5/7 | 3/9 | 5/2 |
| 2 | Mahesh | 4/8 | 6/6 | 1/6 |
| 3 | Suresh | 11/1 | 2/10 | 4/3 |
| 4 | Ramesh | 2/10 | 8/4 | 2/5 |

In events where the data management system 100 fails to locate a leave policy database in its memory (e.g., memory 102), the data management system 100 may communicate the user as the transaction being not valid, and has caused an error in the transaction. Alternatively, the leave policy database may be stored in other systems (e.g., external server, external computer system, or over cloud or over the network). In such scenarios, the data management system 100 may communicate with these systems (by way of polling), and identify an appropriate system that has leave policy database stored. The identification of the appropriate system that has leave policy database may be based on a response to the polling (e.g., yes, no, positive, or negative notifications from the systems to the data management system 100). Upon receiving a yes response from an appropriate system, the data management system 100 may request that system to generate a leave request file and the same is communicated to the user. Alternatively, the data management system 100 may query the identified system/database (based on the polling response) and retrieve records pertaining to the request received from the user from that identified system/database, generate the leave request file, and communicate the same to the user (or client device) via an email.

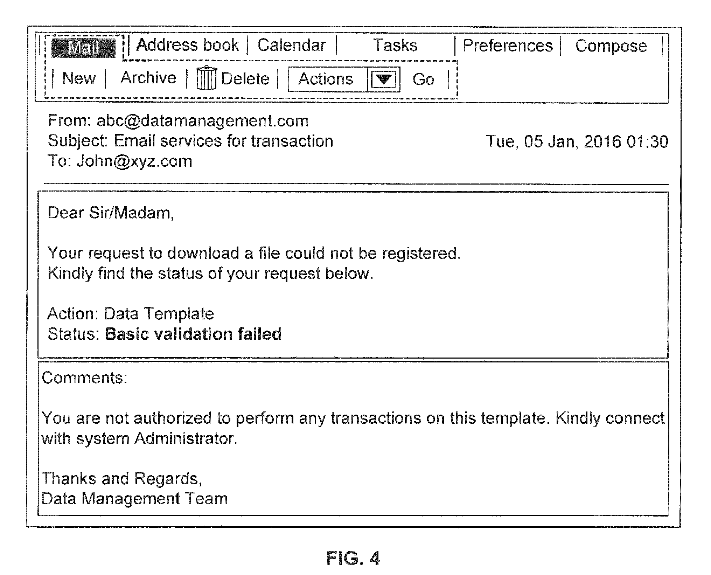

FIG. 4, with reference to FIGS. 1 through 3, is a user interface view that illustrates validation failure status for a specific transaction being performed by a user in accordance with an embodiment of the present disclosure.

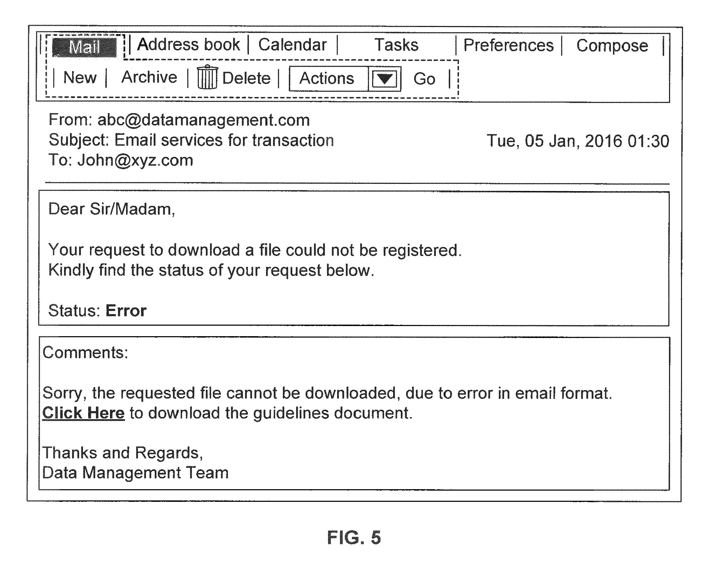

FIG. 5, with reference to FIGS. 1 through 4, is a user interface view that illustrates an error status message being communicated to a client device when a request in an email format for downloading of data is inappropriate in accordance with an embodiment of the present disclosure. More particularly, FIG. 5 depicts an auto-generated email being sent to a client device by the data management system 100 when the request (e.g., email format) for performing a transaction (e.g., downloading of data) is incorrect (or inappropriate) or unacceptable format. Additionally, the data management system 100 also provides its comments for example, providing a hyperlink (e.g., Click Here tab) to download guidelines document, which enables the user to read and perform transactions by following guidelines.

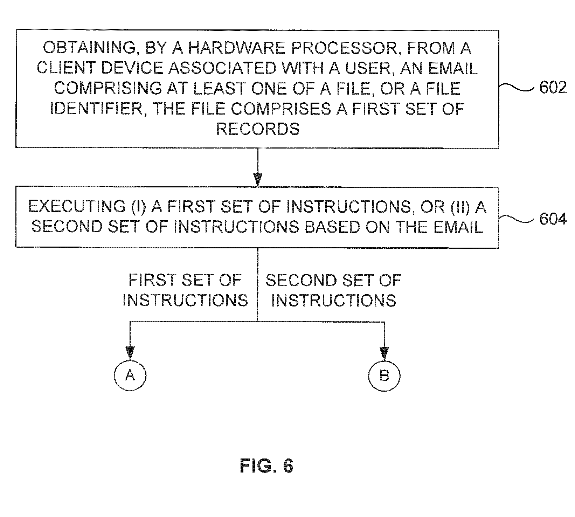

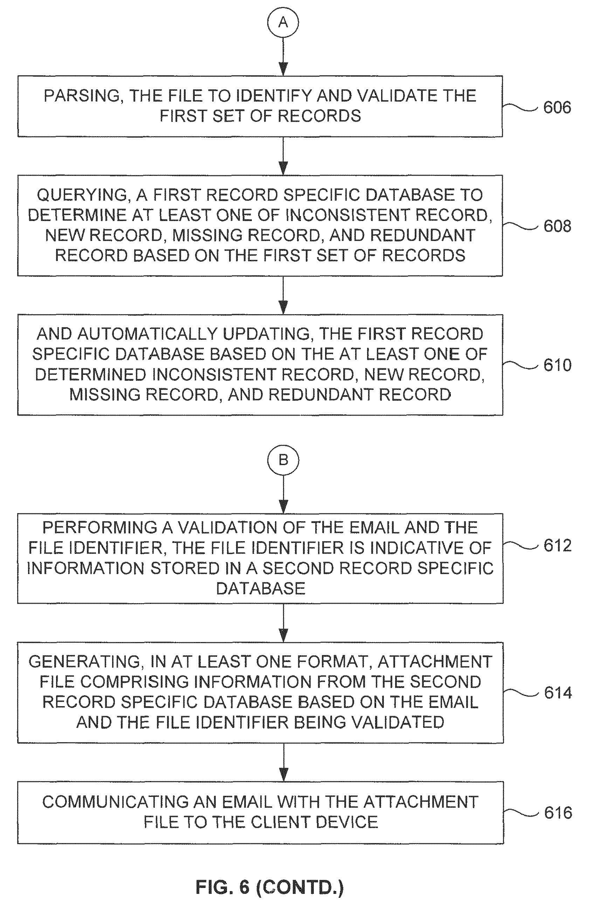

FIG. 6, with reference to FIGS. 1 through 5, is a flow diagram illustrating a processor implemented method using the data management system 100 of FIG. 1 according to an embodiment of the present disclosure. In an embodiment, the method includes obtaining (602), by the hardware processor 104, from a client device associated with a user, an email comprising at least one of a file, or a file identifier. In an embodiment, the attachment file comprises a first set of records in a prescribed format. The method further includes executing (604), a first set of instructions or a second set of instructions based on the email. The first set of instructions comprises parsing (606), the attachment file (or file) to identify and validate the first set of records. In an embodiment, the validation of the first client device and the first user, and the first set of records can happen concurrently. The method further includes querying (608), a first record specific database to determine at least one of inconsistent record, new record, missing record, and redundant record based on the first set of records; and automatically updating (610), the first record specific database based on the at least one of determined inconsistent record, new record, missing record, and redundant record. The method may further include generating a report based on the at least one of determined inconsistent record, new record, missing record, and redundant record.

The second set of instructions comprises performing (612), a validation of the email and the file identifier, the file identifier is indicative of information stored in a second record specific database, the email being received in a predetermined format. Performing a validation comprises performing a validation of at least one of a client device and a user. The second set of instructions further comprises generating (614), in at least one format, at least one attachment file comprising information from the second record specific database based on the email and the file identifier; and communicating (616) an email with the at least one attachment file to the client device when the email and file identifier are is validated.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure implements the data management system 100 that enables to perform one or more transactions, for example downloading and uploading of data, with least human intervention. The data management system 100 further generates a log file in case of issues being encountered. The embodiments of the present disclosure enables to perform transaction such as bulk data upload and download by way of an email request and an attachment identifier using a verified and validated email address, thereby enhancing security by validating client devices and users.

It is, however to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W), BLU-RAY, and DVD.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output (I/O) devices (including but not limited to keyboards, displays, pointing devices, etc.) can be coupled to the system either directly or through intervening I/O controllers. Network adapters may also be coupled to the system to enable the data processing system to become coupled to other data processing systems or remote printers or storage devices through intervening private or public networks. Modems, cable modem and Ethernet cards are just a few of the currently available types of network adapters.

A representative hardware environment for practicing the embodiments may include a hardware configuration of an information handling/computer system in accordance with the embodiments herein. The system herein comprises at least one processor or central processing unit (CPU). The CPUs are interconnected via system bus to various devices such as a random access memory (RAM), read-only memory (ROM), and an input/output (I/O) adapter. The I/O adapter can connect to peripheral devices, such as disk units and tape drives, or other program storage devices that are readable by the system. The system can read the inventive instructions on the program storage devices and follow these instructions to execute the methodology of the embodiments herein.

The system further includes a user interface adapter that connects a keyboard, mouse, speaker, microphone, and/or other user interface devices such as a touch screen device (not shown) to the bus to gather user input. Additionally, a communication adapter connects the bus to a data processing network, and a display adapter connects the bus to a display device which may be embodied as an output device such as a monitor, printer, or transmitter, for example.

The preceding description has been presented with reference to various embodiments. Persons having ordinary skill in the art and technology to which this application pertains will appreciate that alterations and changes in the described structures and methods of operation can be practiced without meaningfully departing from the principle, spirit and scope.

## Claims

1. A processor implemented method comprising:
obtaining, by a hardware processor, from a client device associated with a user, an email comprising at least one of a file, or a file identifier, wherein said file comprises a first set of records;
executing (i) a first set of instructions, or (ii) a second set of instructions based on said email, wherein said first set of instructions comprises:
a) parsing said file to identify and validate said first set of records;
b) querying a first record specific database to determine at least one of inconsistent record, new record, missing record, and redundant record based on said first set of records; and
c) automatically updating said first record specific database based on said at least one of determined inconsistent record, new record, missing record, and redundant record,
wherein said second set of instructions comprises:
i. performing a validation of said email and said file identifier, said file identifier is indicative of information stored in a second record specific database;
ii. generating, in at least one format, attachment file comprising information from said second record specific database based on said email and said file identifier being validated; and
iii. communicating an email with said attachment file to said client device.

2. The processor implemented method of claim 1, wherein the step of obtaining, an email is preceded by validating said client device and said user associated with said email.

3. The processor implemented method of claim 1, further comprising validating said file by performing a file level validation on at least one of a filename, a file size, and content type specific to said file.

4. The processor implemented method of claim 1, further comprising generating a report based on said at least one of determined inconsistent record, new record, missing record, and redundant record.

5. The processor implemented method of claim 1, wherein said first record specific database and said second record specific database are identical.

6. A system comprising:
a memory;
one or more communication interfaces; and
one or more hardware processors coupled to said memory through said one or more communication interfaces, wherein said one or more hardware processors are configured to:
obtain, from a client device associated with a user, an email comprising at least one of a file, or a file identifier, wherein said file comprises a first set of records; and
execute (i) a first set of instructions, or (ii) a second set of instructions based on said email, wherein said first set of instructions are executed by said one or more hardware processors to:
a. parse said file to identify and validate said first set of records;
b. query a first record specific database to determine at least one of inconsistent record, new record, missing record, and redundant record based on said first set of records; and
c. automatically update said first record specific database based on said at least one of determined inconsistent record, new record, missing record, and redundant record, and wherein said second set of instructions are executed by said one or more hardware processors to:
i. perform a validation of said email and said file identifier, said file identifier indicative of information stored in a second record specific database;
ii. generate, in at least one format, an attachment file comprising information from said second record specific database based on said email and said file identifier being validated; and
iii. communicate an email with said attachment file to said client device.

7. The system of claim 6, wherein when said email is obtained, said one or more hardware processor validates said client device and said user associated with said email.

8. The system of claim 6, wherein said one or more hardware processors validate said file by performing a file level validation on at least one of a filename, a file size, and content type specific to said file.

9. The system of claim 6, wherein said one or more hardware processors are further configured to generate a report based on said at least one of determined inconsistent record, new record, missing record, and redundant record.

10. The system of claim 6, wherein said first record specific database and said second record specific database are identical.

11. One or more non-transitory machine readable information storage mediums comprising one or more instructions which when executed by one or more hardware processors causes:
obtaining, by said one or more hardware processors, from a client device associated with a user, an email comprising at least one of a file, or a file identifier, wherein said file comprises a first set of records;
executing (i) a first set of instructions, or (ii) a second set of instructions based on said email, wherein said first set of instructions comprises:
a) parsing said file to identify and validate said first set of records;
b) querying a first record specific database to determine at least one of inconsistent record, new record, missing record, and redundant record based on said first set of records; and
c) automatically updating said first record specific database based on said at least one of determined inconsistent record, new record, missing record, and redundant record,
wherein said second set of instructions comprises:
i. performing a validation of said email and said file identifier, said file identifier is indicative of information stored in a second record specific database;
ii. generating, in at least one format, attachment file comprising information from said second record specific database based on said email and said file identifier being validated; and
iii. communicating an email with said attachment file to said client device.

12. The one or more non-transitory machine readable information storage mediums of claim 11, wherein the step of obtaining, an email is preceded by validating said client device and said user associated with said email.

13. The one or more non-transitory machine readable information storage mediums of claim 11, further comprising validating said file by performing a file level validation on at least one of a filename, a file size, and content type specific to said file.

14. The one or more non-transitory machine readable information storage mediums of claim 11, further comprising generating a report based on said at least one of determined inconsistent record, new record, missing record, and redundant record.

15. The one or more non-transitory machine readable information storage mediums of claim 11, wherein said first record specific database and said second record specific database are identical.
